# EUROPEAN PATENT APPLICATION

(11) **EP 4 682 355 A1**
(43) Date of publication of application: **21.01.2026**
(21) Application number: 25190004.9
(22) Date of filing: 16.07.2025
(51) Int. Cl.: F01D 25/16, F01D 25/12, F01D 5/08

(54) **BEARING ASSEMBLY HOUSING FOR AN AIRCRAFT PROPULSION SYSTEM**

(30) Priority: 16.07.2024 US 202418774506
(71) Applicant: Pratt & Whitney Canada Corp., Longueuil, QC J4G 1A1 (CA)
(72) Inventor: SANZARI, Lorenzo, Montreal (CA); LEFEBVRE, Guy, St-Bruno (CA)
(74) Representative: Dehns

(57) **Abstract**

A gas turbine engine (22) includes a rotational assembly (36) and a bearing assembly (58). The rotational assembly (36) includes a shaft (42). The bearing assembly (58) includes a bearing compartment housing (60) and at least one bearing (62). The bearing compartment housing (60) includes a housing body (66) and at least one feed hole plug (98). The housing body (66) forms a first air flow path (76). The first air flow path (76) includes a first inlet plenum (80), a first outlet plenum (82), and a plurality of first air flow path feed holes (84). The plurality of first air flow path feed holes (84) includes a plurality of first feed holes and a plurality of second feed holes connecting the first inlet plenum (80) in fluid communication with the first outlet plenum (82). The plurality of first feed holes includes at least one obstructed feed hole and at least one unobstructed feed hole. The at least one bearing is mounted to the housing body (66). The at least one bearing (62) is rotationally engaged with the shaft (42).

## Description

### TECHNICAL FIELD

This disclosure relates bearing assemblies for a gas turbine engine of an aircraft propulsion system and, more particularly, to bearing compartment housings.

### BACKGROUND

Rotational equipment, such as a gas turbine engine for an aircraft propulsion system, may typically include one or more bearing assemblies configured to rotationally support components the rotational equipment. Various types and configurations of bearing assemblies are known in the art. While these known bearing assemblies may be suitable for their intended purposes, there is always room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, a gas turbine engine for an aircraft propulsion system includes a rotational assembly and a bearing assembly. The rotational assembly includes a shaft. The shaft is rotatable about a rotational axis. The bearing assembly includes a bearing compartment housing and at least one bearing. The bearing compartment housing surrounds and forms a bearing compartment. The bearing compartment housing includes a housing body and at least one feed hole plug. The housing body extends circumferentially about the rotational axis. The housing body extends axially between and to a first axial housing end and a second axial housing end. The housing body forms a first air flow path through the bearing compartment housing. The first air flow path includes a first inlet plenum at the first axial housing end, a first outlet plenum at the second axial housing end, and a plurality of first air flow path feed holes. The plurality of first air flow path feed holes includes a plurality of first feed holes and a plurality of second feed holes connecting the first inlet plenum in fluid communication with the first outlet plenum. The plurality of first feed holes includes at least one obstructed feed hole and at least one unobstructed feed hole. Each of the at least one feed hole plug is disposed within a respective one of the at least one obstructed feed hole to obstruct air flow through the respective one of the at least one obstructed feed hole along the first air flow path. The at least one bearing is mounted to the housing body and disposed within the bearing compartment. The at least one bearing is rotationally engaged with the shaft.

In any of the aspects or embodiments described above and herein, the gas turbine engine may further include a compressor section and a turbine section. The first inlet plenum may be connected in fluid communication with the compressor section. The first outlet plenum may be connected in fluid communication with the turbine section. The housing body may be configured to direct a first compressed bleed air from the compressor section to the turbine section along the first air flow path.

In any of the aspects or embodiments described above and herein, the housing body may form a second air flow path through the bearing compartment housing. The second air flow path may include a second inlet plenum at the first axial housing end, a second outlet plenum at the second axial housing end, and a plurality of second air flow path feed holes. The plurality of second air flow path feed holes may connect the second inlet plenum in fluid communication with the second outlet plenum.

In any of the aspects or embodiments described above and herein, the first air flow path may be independent of the second air flow path through the bearing compartment housing.

In any of the aspects or embodiments described above and herein, the second inlet plenum may be connected in fluid communication with the compressor section. The second outlet plenum may be connected in fluid communication with the bearing compartment. The housing body may be configured to direct a second compressed bleed air from the compressor section to the bearing compartment along the second air flow path.

In any of the aspects or embodiments described above and herein, each of the plurality of first feed holes may be a threaded hole having a first threading interface. Each of the plurality of second feed holes may be an unthreaded hole. Each of the at least one feed hole plug may include a second threading interface engaged with the first threading interface for the respective one of the at least one obstructed feed hole.

In any of the aspects or embodiments described above and herein, the bearing compartment housing may include a threaded insert installed on the housing body and forming the first threading interface of each respective one of the plurality of first feed holes.

In any of the aspects or embodiments described above and herein, each of the first air flow path feed holes may be axially unobstructed by the housing body between the first axial housing end and each of the first air flow path feed holes.

In any of the aspects or embodiments described above and herein, the first inlet plenum may be an annular first inlet plenum and the first outlet plenum is an annular first outlet plenum.

In any of the aspects or embodiments described above and herein, each of the at least one feed hole plug may be a headless feed hole plug.

According to another aspect of the present disclosure, a gas turbine engine for an aircraft propulsion system includes a compressor section, a turbine section, a rotational assembly, and a bearing assembly. The rotational assembly includes a bladed compressor rotor for the compressor section, a bladed turbine rotor for the turbine section, and a shaft interconnecting the bladed compressor rotor and the bladed turbine rotor. The rotational assembly is rotatable about a rotational axis. The bearing assembly includes a bearing compartment housing and at least one bearing. The bearing compartment housing surrounds and forms a bearing compartment. The bearing compartment housing includes a housing body and at least one feed hole plug. The housing body extends circumferentially about the rotational axis. The housing body forms a first air flow path through the bearing compartment housing. The first air flow path connects the compressor section in fluid communication with the turbine section. The first air flow path includes a plurality of first air flow path feed holes. The plurality of first air flow path feed holes includes a plurality of first feed holes and a plurality of second feed holes. The plurality of first feed holes includes at least one obstructed feed hole and at least one unobstructed feed hole. Each of the at least one feed hole plug is disposed within a respective one of the at least one obstructed feed hole to obstruct air flow through the respective one of the at least one obstructed feed hole along the first air flow path. The at least one bearing is mounted to the housing body and disposed within the bearing compartment. The at least one bearing is rotationally engaged with the rotational assembly.

In any of the aspects or embodiments described above and herein, the housing body may form a second air flow path through the bearing compartment housing. The second air flow path may include a plurality of second air flow path feed holes. The plurality of second air flow path feed holes may connect the compressor section in fluid communication with the bearing compartment.

In any of the aspects or embodiments described above and herein, the first air flow path may be independent of the second air flow path through the bearing compartment housing.

In any of the aspects or embodiments described above and herein, each of the plurality of first feed holes may be a threaded hole having a first threading interface. Each of the plurality of second feed holes may be an unthreaded hole. Each of the at least one feed hole plug may include a second threading interface engaged with the first threading interface for the respective one of the at least one obstructed feed hole.

In any of the aspects or embodiments described above and herein, the bearing compartment housing may include a threaded insert installed on the housing body and forming the first threading interface of each respective one of the plurality of first feed holes.

According to another aspect of the present disclosure, a gas turbine engine for an aircraft propulsion system includes a rotational assembly and a bearing assembly. The rotational assembly includes a shaft. The shaft is rotatable about a rotational axis. The bearing assembly includes a bearing compartment housing and at least one bearing. The bearing compartment housing surrounds and forms a bearing compartment. The bearing compartment housing includes a housing body and at least one feed hole plug. The housing body extends circumferentially about the rotational axis. The housing body forms a first air flow path through the bearing compartment housing. The first air flow path includes a plurality of first air flow path feed holes. The plurality of first air flow path feed holes includes a plurality of threaded feed holes and a plurality of unthreaded feed holes. The plurality of threaded feed holes includes at least one obstructed feed hole and at least one unobstructed feed hole. Each of the at least one feed hole plug is threaded within a respective one of the at least one obstructed feed hole to obstruct air flow through the respective one of the at least one obstructed feed hole along the first air flow path. The at least one bearing is mounted to the housing body and disposed within the bearing compartment. The at least one bearing is rotationally engaged with the shaft.

In any of the aspects or embodiments described above and herein, the gas turbine engine may further include a compressor section and a turbine section. The plurality of first air flow path feed holes may be connected in fluid communication with and between the compressor section and the turbine section. The housing body may be configured to direct a first compressed bleed air from the compressor section to the turbine section along the first air flow path.

In any of the aspects or embodiments described above and herein, the housing body may form a second air flow path through the bearing compartment housing. The second air flow path may include a plurality of second air flow path feed holes. The plurality of second air flow path feed holes may be connected in fluid communication with and between the compressor section and the bearing compartment.

In any of the aspects or embodiments described above and herein, the first air flow path may be independent of the second air flow path through the bearing compartment housing.

In any of the aspects or embodiments described above and herein, the bearing compartment housing may include a threaded insert installed on the housing body at each of the plurality of threaded feed holes

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates an aircraft including a propulsion system, in accordance with one or more embodiments of the present disclosure.
FIG. 2 schematically illustrates a cutaway, side view of an aircraft propulsion system, in accordance with one or more embodiments of the present disclosure.
FIG. 3 illustrates a cutaway, side view of a portion of a gas turbine engine and a bearing assembly for the aircraft propulsion system, in accordance with one or more embodiments of the present disclosure.
FIG. 4 illustrates a front view of a bearing compartment housing for the bearing assembly, in accordance with one or more embodiments of the present disclosure.
FIG. 5 illustrates a cutaway, side view of a portion of the bearing compartment housing including a feed hole and a feed hole plug, in accordance with one or more embodiments of the present disclosure.

### DETAILED DESCRIPTION

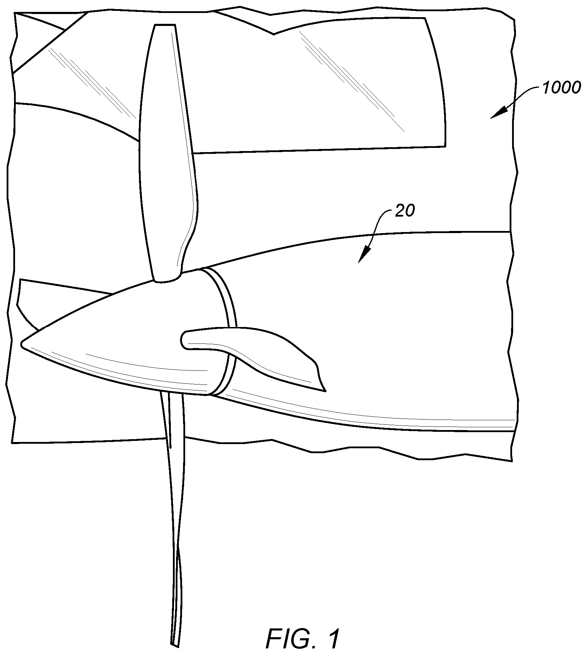

FIG. 1 illustrates an aircraft 1000 including a propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

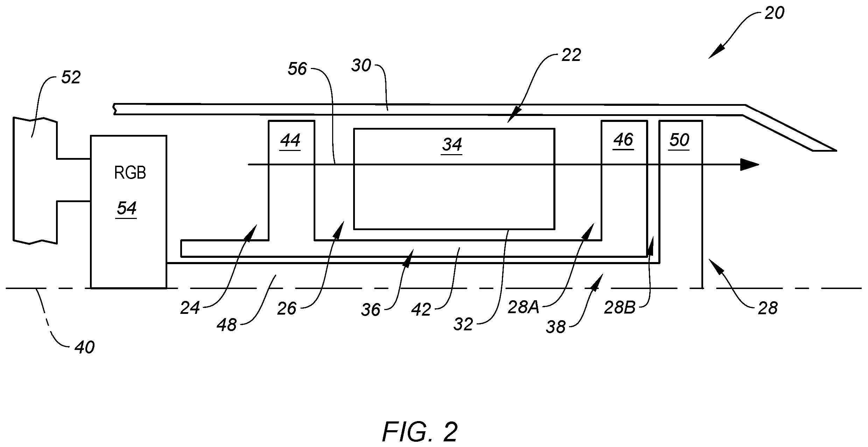

FIG. 2 schematically illustrates a cutaway, side view of the propulsion system 20. The propulsion system 20 of FIG. 2 includes a gas turbine engine 22. The gas turbine engine 22 of FIG. 2 is configured as a turboprop engine. However, the present disclosure is not limited to any particular configuration of gas turbine engine for the propulsion assembly 20, and examples of gas turbine engine configurations for the propulsion system 20 may include, but are not limited to, a turbofan engine, a turbojet engine, a propfan engine, or the like.

The gas turbine engine 22 of FIG. 1 includes a compressor section 24, a combustor section 26, a turbine section 28, and an engine static structure 30. The combustor section 26 includes a combustor 32 (e.g., an annular combustor) forming a combustion chamber 34. The turbine section 28 includes a high-pressure turbine section 28A and a power turbine section 28B.

Components of the compressor section 24 and the turbine section 28 of FIG. 2 form a first rotational assembly 36 (e.g., a high-pressure spool) and a second rotational assembly 38 of the gas turbine engine 22. The first rotational assembly 36 and the second rotational assembly 38 are mounted for rotation about a rotational axis 40 (e.g., an axial centerline) of the gas turbine engine 22 relative to the engine static structure 30.

The first rotational assembly 36 includes a first shaft 42, a bladed compressor rotor 44 for the compressor section 28, and a bladed first turbine rotor 46 for the high-pressure turbine section 28A. The first shaft 42 interconnects the bladed compressor rotor 44 and the bladed first turbine rotor 46.

The second rotational assembly 38 includes a second shaft 48 and a bladed second turbine rotor 50 for the power turbine section 28B. The second shaft 48 is connected to the bladed second turbine rotor 50. The second shaft 48 operably connects (e.g., directly or indirectly connects) the bladed second turbine rotor 50 with a propulsor 52 of the propulsion system 20. As shown in FIG. 2, for example, the second shaft 48 may be coupled with the propulsor 52 by a reduction gear box 54. The reduction gear box 54 may include a gear assembly (e.g., an epicyclic gear assembly) configured to drive the propulsor 52 at a reduced rotational speed relative to the second shaft 48. Of course, the second shaft 48 may alternatively be directly connected to the propulsor 52 to drive the propulsor 52 at the same rotational speed as the second shaft 48.

The engine static structure 30 includes engine casings, cowlings, and other fixed (e.g., non-rotating) structures of the gas turbine engine 22 which house and/or support components of the gas turbine engine 22 such as, but not limited to, those of the compressor section 24, the combustor section 26, and the turbine section 28. The engine static structure 30 further includes one or more bearing assemblies configured to rotationally support components of the first rotational assembly 36 and the second rotational assembly 38.

During operation of the propulsion system 20 of FIG. 2, ambient air enters the propulsion system 20 through an air intake into and through a core flow path 56 of the gas turbine engine 22. The ambient air flow along the core flow path 56 is compressed in the compressor section 24 and directed into the combustion chamber 34 of the combustor 32 within the combustor section 26. Fuel is injected into the combustion chamber 34 and mixed with the compressed air to provide a fuel-air mixture. This fuel-air mixture is ignited, and combustion products thereof flow through the high-pressure turbine section 28A and the power turbine section 28B, and are exhausted from the propulsion system 20. The bladed first turbine rotor 46 and the bladed second turbine rotor 50 rotationally drive the first rotational assembly 36 and the second rotational assembly 38, respectively, in response to the combustion gas flow through the high-pressure turbine section 28A and the power turbine section 28B.

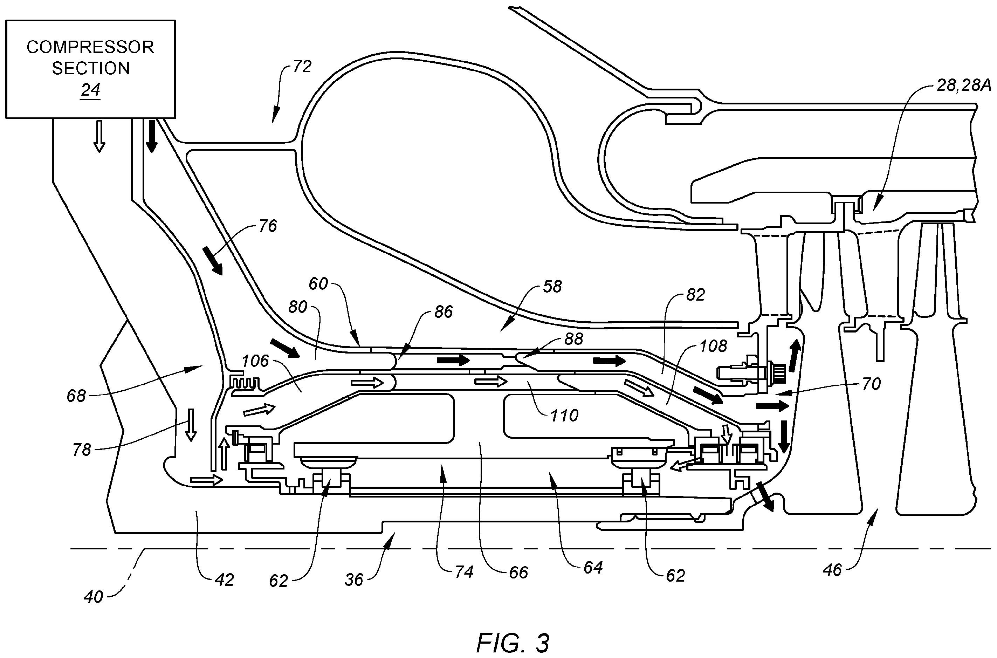

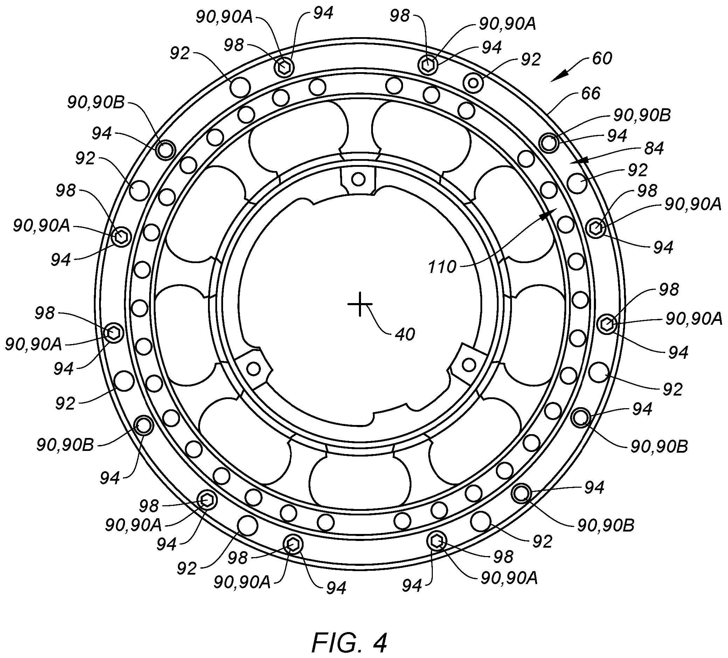

FIG. 3 illustrates a cutaway, side view of a bearing assembly 58 of the engine static structure 30 (see FIG. 2). The bearing assembly 58 of FIG. 3 is configured to rotationally support the first rotational assembly 36 (e.g., the first shaft 42), however, the present disclosure is not limited to the foregoing configuration of the bearing assembly 58 for the first rotational assembly 36. The bearing assembly 58 includes a bearing compartment housing 60 and one or more bearings 62. FIG. 4 illustrates a front view of the bearing compartment housing 60.

The housing 60 surrounds and forms a bearing compartment 64 of the bearing assembly 58. The housing 60 is configured to direct compressed air (e.g., bleed air from the compressor section 24) to the bearing compartment 64 as well as other components of the gas turbine engine 22 such as, but not limited to, the high-pressure turbine section 28A (e.g., the bladed first turbine rotor 46). The housing 60 supports the bearings 62 in rotational communication with the first rotational assembly 36.

The housing 60 includes an annular housing body 66. The housing body 66 extends circumferentially about (e.g., completely around) the rotational axis 40. The housing body 66 extends axially between and to a first axial end 68 of the housing body 66 and a second axial end 70 of the housing body 66. The first axial end 68 may be disposed at (e.g., on, adjacent, or proximate) the compressor section 24. The second axial end 70 may be disposed at (e.g., on, adjacent, or proximate) the turbine section 28. The housing body 66 may be mounted to one or more engine static structure 30 components (e.g., casings) of the compressor section 24 and/or the turbine section 28 at (e.g., on, adjacent, or proximate) the first axial end 68 and/or the second axial end 70, respectively. The housing body 66 extends radially between and to an outer radial end 72 of the housing body 66 and an inner radial end 74 of the housing body 66.

The housing body 66 forms a first air flow path 76 and a second air flow path 78 through the housing 60. The first air flow path 76 of FIGS. 3 and 4 is disposed radially outward of the second air flow path 78 of FIGS. 3 and 4. The present disclosure, however, is not limited to this particular orientation of the first air flow path 76 and the second air flow path 78. The first air flow path 76 is independent of (e.g., fluidly isolated from) the second air flow path 78 through the housing 60.

The housing body 66 forms an inlet plenum 80, an outlet plenum 82, and a plurality of feed holes 84 forming the first air flow path 76. The housing body 66 forms the inlet plenum 80 at (e.g., on, adjacent, or proximate) the first axial end 68. The inlet plenum 80 is connected in fluid communication with the compressor section 24. The inlet plenum 80 may be configured as an annular plenum extending circumferentially about (e.g., completely around) the rotational axis 40. The housing body 66 forms the outlet plenum 82 at (e.g., on, adjacent, or proximate) the second axial end 70. The outlet plenum 82 is connected in fluid communication with the turbine section 28 (e.g., the high-pressure turbine section 28A). The outlet plenum 82 may be configured as an annular plenum extending circumferentially about (e.g., completely around) the rotational axis 40. The housing body 66 forms the feed holes 84 between (e.g., axially between) the inlet plenum 80 and the outlet plenum 82. Each of the feed holes 84 extends (e.g., axially extends) between and connects the inlet plenum 80 and the outlet plenum 82 in fluid communication. The feed holes 84 are circumferentially arrayed about the rotational axis 40 as shown, for example, in FIG. 4. Each of the feed holes 84 extends (e.g., axially extends) between and to a first axial end 86 of each respective feed hole 84 and a second axial end 88 of each respective feed hole 84. The first axial end 86 is disposed at (e.g., on, adjacent, or proximate) the inlet plenum 80. The second axial end 88 is disposed at (e.g., on, adjacent, or proximate) the outlet plenum 82. The housing body 66 may form the inlet plenum 80 and the feed holes 84 such that the feed holes 84 are axially unobstructed (e.g., by the housing body 66) from the first axial end 68 to the first axial end 86.

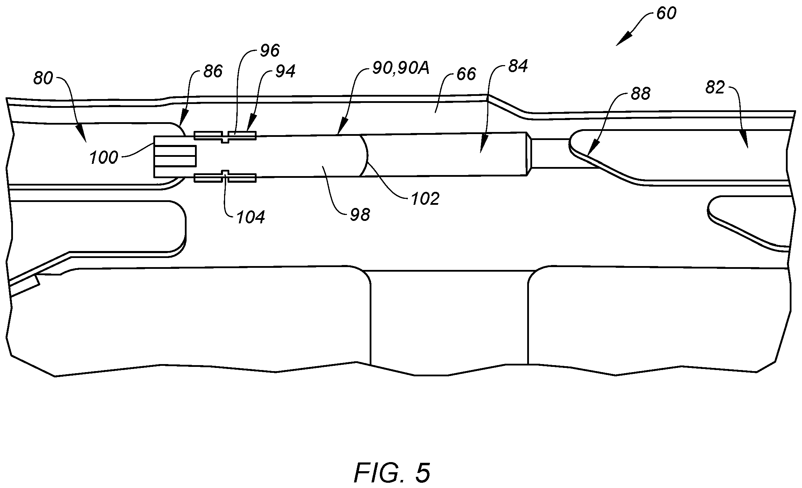

The feed holes 84 of FIGS. 3 and 4 include one or more first feed holes 90 (e.g., a first subset of the feed holes 84) and one or more second feed holes 92 (e.g., a second subset of the feed holes 84). Each of the first feed holes 90 is a threaded feed hole and each of the second feed holes 92 is an unthreaded feed hole (e.g., a feed hole which does not include a threading interface). FIG. 5 illustrates a cutaway, side view of a portion of the housing body 66 including one of the first feed holes 90. Each of the first feed holes 90 includes a threading interface 94 (e.g., a helical threading). The threading interface 94 may be disposed at (e.g., on, adjacent, or proximate) the first axial end 86. The threading interface 94 of FIG. 5 is formed by a threading insert 96 mounted within the housing body 66 and circumscribing a respective one of the first feed holes 90. Examples of the threading insert 96 include, but are not limited to, those threaded inserts sold by Böllhoff Produktion GmbH (Bielefeld, Germany) under its HELI-COIL^{®} and HELICOIL^{®} trademarks. Alternatively, the threading interface 94 may be formed by the housing body 66. The first feed holes 90 and the second feed holes 92 may be circumferentially arrayed about the rotational axis 40 as shown, for example, in FIG. 4. In some embodiments, each of the feed holes 84 may be threaded feed holes. In other words, all of the feed holes 84 may be the first feed holes 90.

The housing 60 includes one or more feed hole plugs 98. Each of the feed hole plugs 98 may be configured as a threaded fastener extending between and to a first axial end 100 of each of the feed hole plugs 98 and a second axial end 102 of each of the feed hole plugs 98. Each of the feed hole plugs 98 includes a threading interface 104 configured for threaded engagement with the threading interface 94. The feed hole plugs 98 may have a headless configuration on the first axial end 100 (e.g., the feed holes 98 may not include a radially-enlarged head portion). The headless configuration of the feed hole plugs 98 may facilitate a reduction in the radial envelope of the feed hole plugs 98 within the constrained space of the housing 60. However, the feed hole plugs 98 may alternatively include a radially-enlarged head portion on the first axial end 100. Each of the feed hole plugs 98, installed in a respective one of the first feed holes 90, obstructs all or substantially all air flow through the respective one of the first feed holes 90.

The feed hole plugs 98 may be installed in none, some, or all of the first feed holes 90 to facilitate control of air flow along the first air flow path 76. As shown in FIG. 4, for example, the first feed holes 90 and the feed hole plugs 98 may form one or more obstructed feed holes 90A of the first feed holes 90 and one or more unobstructed feed holes 90B of the first feed holes 90. All or substantially all air flow into and through the obstructed feed holes 90A (e.g., from the inlet plenum 80 to the outlet plenum 82) may be obstructed (e.g., by the feed hole plugs 98). In contrast, air flow along the first air flow path 76 may be directed from the inlet plenum 80 to the outlet plenum 82 through the unobstructed feed holes 90B and the second feed holes 92.

The housing body 66 forms an inlet plenum 106, an outlet plenum 108, and a plurality of feed holes 110 forming the second air flow path 78. The housing body 66 forms the inlet plenum 106 at (e.g., on, adjacent, or proximate) the first axial end 68. The inlet plenum 106 is connected in fluid communication with the compressor section 24. The inlet plenum 106 may be configured as an annular plenum extending circumferentially about (e.g., completely around) the rotational axis 40. The housing body 66 forms the outlet plenum 108 at (e.g., on, adjacent, or proximate) the second axial end 70. The outlet plenum 108 is connected in fluid communication with the bearing compartment 64. The outlet plenum 108 may be configured as an annular plenum extending circumferentially about (e.g., completely around) the rotational axis 40. The housing body 66 forms the feed holes 110 between (e.g., axially between) the inlet plenum 106 and the outlet plenum 108. Each of the feed holes 110 extends (e.g., axially extends) between and connects the inlet plenum 106 and the outlet plenum 108 in fluid communication.

Each of the bearings 62 is mounted to the housing body 66 (e.g., the inner radial end 74) within the bearing compartment 64. Each of the bearings 62 is engaged with the first rotational assembly 36 to rotationally support the first rotational assembly 36. For example, each of the bearings 62 may be directly engaged with the first shaft 42 or with one or more intermediate shaft components of the first rotational assembly 36.

During operation of the gas turbine engine 22 (see FIG. 2), compressed bleed air from the compressor section 24 is directed through the housing 60 along the first air flow path 76. The compressed bleed air along the first air flow path 76 may be directed from an outlet or intermediate compressor stage of the compressor section 24. The compressed bleed air along the first air flow path 76 is directed by the housing body 66 to the turbine section 28 (e.g., the high-pressure turbine section 28A), for example, to facilitate cooling of the bladed first turbine rotor 46 and other turbine section 28 components. The configuration of the first feed holes 90 and the feed hole plugs 98 facilitates control of a flow rate of the compressed bleed air supplied to the turbine section 28 by allowing the flow rate of the compressed bleed air to be selectively aligned with the requirements of the particular gas turbine engine 22 in which the housing 60 is installed. For example, a technician may install a selected quantity of the feed hole plugs 98 into one or more respective holes of the first feed holes 90 to form the obstructed feed holes 90A and the unobstructed feed holes 90B for the particular gas turbine engine 22 in which the housing 60 is installed. The housing 60 may, therefore, facilitate control of the supply of compressed bleed air to the turbine section 28 for a plurality of different gas turbine engine 22 configurations (e.g., different engine models) having different turbine section 28 cooling needs, while using a same housing body 66. Compressed bleed air from the compressor section 24 is also directed through the housing 60 along the second air flow path 78. The compressed bleed air along the second air flow path 78 may be directed from an outlet or intermediate compressor stage of the compressor section 24. For example, the compressed air along the second flow path 78 may be supplied from a compressor stage which is upstream of the outlet or compressor stage supplying the compressed bleed air to the first air flow path 76. In other words, the compressed bleed air supplied to the first air flow path 76 may have a greater pressure than the compressed bleed air supplied to the second air flow path 78. The present disclosure, however, is not limited to any particular relative pressures of the first air flow path 76 and the second air flow path 78. The compressed bleed air along the second air flow path 78 is directed by the housing body 66 to the bearing compartment 64, for example, to facilitate buffering and cooling of the bearing compartment 64 and bearing assembly 58 components therein.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A gas turbine engine for an aircraft propulsion system, the gas turbine engine comprising:
a rotational assembly including a shaft, and the shaft is rotatable about a rotational axis; and
a bearing assembly including a bearing compartment housing and at least one bearing,
the bearing compartment housing surrounds and forms a bearing compartment, the bearing compartment housing includes a housing body and at least one feed hole plug, the housing body extends circumferentially about the rotational axis, the housing body extends axially between and to a first axial housing end and a second axial housing end, the housing body forms a first air flow path through the bearing compartment housing, the first air flow path includes a first inlet plenum at the first axial housing end, a first outlet plenum at the second axial housing end, and a plurality of first air flow path feed holes, the plurality of first air flow path feed holes includes a plurality of first feed holes and a plurality of second feed holes connecting the first inlet plenum in fluid communication with the first outlet plenum, the plurality of first feed holes includes at least one obstructed feed hole and at least one unobstructed feed hole, each of the at least one feed hole plug is disposed within a respective one of the at least one obstructed feed hole to obstruct air flow through the respective one of the at least one obstructed feed hole along the first air flow path, and
the at least one bearing is mounted to the housing body and disposed within the bearing compartment, and the at least one bearing is rotationally engaged with the shaft.

2. The gas turbine engine of claim 1, further comprising a compressor section and a turbine section, the first inlet plenum is connected in fluid communication with the compressor section, the first outlet plenum is connected in fluid communication with the turbine section, and the housing body is configured to direct a first compressed bleed air from the compressor section to the turbine section along the first air flow path.

3. The gas turbine engine of claim 2, wherein the housing body forms a second air flow path through the bearing compartment housing, the second air flow path includes a second inlet plenum at the first axial housing end, a second outlet plenum at the second axial housing end, and a plurality of second air flow path feed holes, and the plurality of second air flow path feed holes connect the second inlet plenum in fluid communication with the second outlet plenum.

4. The gas turbine engine of claim 3, wherein the first air flow path is independent of the second air flow path through the bearing compartment housing.

5. The gas turbine engine of claim 3, wherein the second inlet plenum is connected in fluid communication with the compressor section, the second outlet plenum is connected in fluid communication with the bearing compartment, and the housing body is configured to direct a second compressed bleed air from the compressor section to the bearing compartment along the second air flow path.

6. The gas turbine engine of any preceding claim, wherein each of the plurality of first feed holes is a threaded hole having a first threading interface, each of the plurality of second feed holes is an unthreaded hole, and each of the at least one feed hole plug includes a second threading interface engaged with the first threading interface for the respective one of the at least one obstructed feed hole.

7. The gas turbine engine of claim 6, wherein the bearing compartment housing includes a threaded insert installed on the housing body and forming the first threading interface of each respective one of the plurality of first feed holes.

8. The gas turbine engine of any preceding claim, wherein each of the first air flow path feed holes is axially unobstructed by the housing body between the first axial housing end and each of the first air flow path feed holes, and/or
wherein the first inlet plenum is an annular first inlet plenum and the first outlet plenum is an annular first outlet plenum, and/or
wherein each of the at least one feed hole plug is a headless feed hole plug.

9. A gas turbine engine for an aircraft propulsion system, the gas turbine engine comprising:
a compressor section;
a turbine section;
a rotational assembly including a bladed compressor rotor for the compressor section, a bladed turbine rotor for the turbine section, and a shaft interconnecting the bladed compressor rotor and the bladed turbine rotor, and the rotational assembly is rotatable about a rotational axis; and
a bearing assembly including a bearing compartment housing and at least one bearing,
the bearing compartment housing surrounds and forms a bearing compartment, the bearing compartment housing includes a housing body and at least one feed hole plug, the housing body extends circumferentially about the rotational axis, the housing body forms a first air flow path through the bearing compartment housing, the first air flow path connects the compressor section in fluid communication with the turbine section, the first air flow path includes a plurality of first air flow path feed holes, the plurality of first air flow path feed holes includes a plurality of first feed holes and a plurality of second feed holes, the plurality of first feed holes includes at least one obstructed feed hole and at least one unobstructed feed hole, each of the at least one feed hole plug is disposed within a respective one of the at least one obstructed feed hole to obstruct air flow through the respective one of the at least one obstructed feed hole along the first air flow path, and
the at least one bearing is mounted to the housing body and disposed within the bearing compartment, and the at least one bearing is rotationally engaged with the rotational assembly.

10. The gas turbine engine of claim 9, wherein the housing body forms a second air flow path through the bearing compartment housing, the second air flow path includes a plurality of second air flow path feed holes, and the plurality of second air flow path feed holes connect the compressor section in fluid communication with the bearing compartment,
wherein, optionally, the first air flow path is independent of the second air flow path through the bearing compartment housing.

11. The gas turbine engine of claim 9 or 10, wherein each of the plurality of first feed holes is a threaded hole having a first threading interface, each of the plurality of second feed holes is an unthreaded hole, and each of the at least one feed hole plug includes a second threading interface engaged with the first threading interface for the respective one of the at least one obstructed feed hole,
wherein, optionally, the bearing compartment housing includes a threaded insert installed on the housing body and forming the first threading interface of each respective one of the plurality of first feed holes.

12. A gas turbine engine for an aircraft propulsion system, the gas turbine engine comprising:
a rotational assembly including a shaft, and the shaft is rotatable about a rotational axis; and
a bearing assembly including a bearing compartment housing and at least one bearing,
the bearing compartment housing surrounds and forms a bearing compartment, the bearing compartment housing includes a housing body and at least one feed hole plug, the housing body extends circumferentially about the rotational axis, the housing body forms a first air flow path through the bearing compartment housing, the first air flow path includes a plurality of first air flow path feed holes, the plurality of first air flow path feed holes includes a plurality of threaded feed holes and a plurality of unthreaded feed holes, the plurality of threaded feed holes includes at least one obstructed feed hole and at least one unobstructed feed hole, each of the at least one feed hole plug is threaded within a respective one of the at least one obstructed feed hole to obstruct air flow through the respective one of the at least one obstructed feed hole along the first air flow path, and
the at least one bearing is mounted to the housing body and disposed within the bearing compartment, and the at least one bearing is rotationally engaged with the shaft.

13. The gas turbine engine of claim 12, further comprising a compressor section and a turbine section, the plurality of first air flow path feed holes are connected in fluid communication with and between the compressor section and the turbine section, and the housing body is configured to direct a first compressed bleed air from the compressor section to the turbine section along the first air flow path.

14. The gas turbine engine of claim 13, wherein the housing body forms a second air flow path through the bearing compartment housing, the second air flow path includes a plurality of second air flow path feed holes, and the plurality of second air flow path feed holes are connected in fluid communication with and between the compressor section and the bearing compartment,
wherein, optionally, the first air flow path is independent of the second air flow path through the bearing compartment housing.

15. The gas turbine engine of claim 12, 13, or 14, wherein the bearing compartment housing includes a threaded insert installed on the housing body at each of the plurality of threaded feed holes.
